# DEMANDE DE BREVET EUROPEEN

(11) **EP 0 597 774 A1**
(43) Date de publication de la demande: **18.05.1994**
(21) Numéro de dépôt: 93402753.3
(22) Date de dépôt: 10.11.1993
(51) Int. Cl.: H04M 11/02, H04M 1/02

(54) **Portier d'immeuble**

(30) Priorité: 13.11.1992 FR 9213658
(71) Demandeur: LEGRAND, F-87045 Limoges Cédex (FR)
(72) Inventeur: Daniellot, Gérard, F-64290 Gan (FR); Dessarps, Jacques, F-64000 Pau (FR); Pecout, Philippe, F-64160 Morlaas (FR); Vermersch, Frédéric, F-64000 Pau (FR)
(74) Mandataire: CABINET BONNET-THIRION

(57) **Abrégé**

Il s'agit d'un portier du genre comportant, outre un poste central (11) propre à son alimentation, un poste extérieur (14) à la disposition d'un visiteur, un poste intérieur (16) par logement, et une filerie (17) propre à l'établissement d'une liaison de communication entre le poste extérieur (14) et un tel poste intérieur (16).

Suivant l'invention, l'ensemble d'appel du poste extérieur (14) comporte un clavier d'au moins deux touches permettant un appel codé de chacun des postes intérieurs (16), et, outre la liaison bifilaire (19) nécessaire entre le poste extérieur (14) et la gâche (18), la partie audio de la filerie (17) se réduit, d'une part, à une liaison bifilaire entre le poste extérieur (14) et le poste central (11), et, d'autre part, à une liaison monofilaire (27) entre le poste central (11) et chacun des postes intérieurs (16) à laquelle est associé un retour (28) commun à l'ensemble de ces postes intérieurs (16).

Application, notamment, à l'équipement d'immeubles collectifs.

## Description

La présente invention concerne d'une manière générale les portiers d'immeuble, c'est-à-dire les appareillages dont il est usuel de nos jours d'équiper certains immeubles, et notamment certains immeubles collectifs, pour permettre de l'extérieur l'établissement d'une liaison entre un visiteur se présentant à la porte d'un tel immeuble et un occupant de celui-ci, avec, à la disposition de ce dernier, une commande propre à l'actionnement à distance de la gâche correspondante.

Globalement, un tel portier d'immeuble comporte à ce jour, outre un poste central propre à son alimentation, un poste extérieur à la disposition du visiteur, un poste intérieur par logement, et une filerie propre à l'établissement d'une liaison de communication entre le poste extérieur et l'un quelconque des postes intérieurs, le poste extérieur comportant, notamment, un ensemble d'appel et un ensemble de communication, et chacun des postes intérieurs comportant, lui-même, notamment, un ensemble de communication et, pour l'actionnement de la gâche à piloter, un ensemble de commande.

A ce jour, l'ensemble d'appel du poste extérieur comporte en pratique au moins autant de boutons-poussoirs qu'il y a de postes intérieurs susceptibles d'être appelés, avec une identification individuelle de chacun de ceux-ci.

Il en résulte de nombreux inconvénients.

Tout d'abord, en raison même du grand nombre de boutons-poussoirs qu'elle doit ainsi enserrer, la plaque de rue d'un tel poste extérieur est nécessairement étendue en surface, au détriment de son encombrement et de l'esthétique.

En outre, pour satisfaire les divers cas d'utilisation possibles, il est nécessaire de prévoir par avance toute une gamme de plaques de rue comportant chacune respectivement un nombre différent de boutons-poussoirs, ce qui conduit à une multiplication des références correspondantes, au détriment des frais de fabrication et de stockage.

Enfin, de l'extérieur à l'intérieur, la filerie comporte nécessairement au moins autant de fils qu'il y a de postes intérieurs à desservir, et le câblage de ces fils doit se faire à partir du poste extérieur, en un lieu usuellement peu propice à une telle opération aussi bien qu'aux éventuelles opérations ultérieures de maintenance correspondantes.

Par ailleurs, dans les portiers d'immeuble connus à ce jour, les divers appareillages nécessaires à la desserte du poste extérieur équipent directement ce dernier, au détriment de son volume, et donc de son encombrement, et il en est de même pour les appareillages nécessaires à la desserte des postes intérieurs.

La présente invention a pour objet un portier d'immeuble exempt de ces inconvénients.

Ce portier d'immeuble, qui est du genre comportant, outre un poste central propre à son alimentation, un poste extérieur à la disposition d'un visiteur, un poste intérieur par logement, et une filerie propre à l'établissement d'une liaison de communication entre le poste extérieur et l'un quelconque des postes intérieurs, le poste extérieur comportant, notamment, un ensemble d'appel et un ensemble de communication, et chacun des postes intérieurs comportant, lui-même, notamment, un ensemble de communication et, pour l'actionnement de la gâche à piloter, un ensemble de commande, est d'une manière générale caractérisé en ce que, l'ensemble d'appel du poste extérieur comportant un clavier d'au moins deux touches, ledit clavier permet un appel codé de chacun des postes intérieurs, et, indépendamment de la liaison bifilaire nécessaire entre le poste extérieur et la gâche, la partie audio de la filerie se réduit, d'une part, à une liaison bifilaire entre le poste extérieur et le poste central, et, d'autre part, à une liaison monofilaire entre le poste central et chacun des postes intérieurs à laquelle est associé un retour commun à l'ensemble de ces postes intérieurs.

Il en résulte, avantageusement, une simplification du câblage à assurer au poste extérieur, avec le report de l'essentiel de ce câblage au poste central, où il peut avantageusement se faire dans des conditions plus appropriées.

Il en résulte, également, une réduction très sensible, de l'ordre de la moitié, du nombre de références à gérer pour les divers composants à mettre en oeuvre.

S'agissant, en particulier, du poste extérieur, la plaque de rue peut avantageusement être toujours la même quel que soit l'immeuble à équiper, c'est-à-dire quel que soit le nombre de postes intérieurs à desservir.

Ainsi, l'électricien effectuant l'installation d'un tel portier d'immeuble peut avantageusement anticiper cette installation et son chantier.

En outre le codage intervenant ainsi suivant l'invention entre le poste extérieur et le poste central permet avantageusement d'assurer directement le secret d'écoute de tout appel, sans adjonction de quelconque matériel supplémentaire, seul étant commuté sur un tel appel le relais correspondant au poste intérieur appelé à l'exclusion des autres.

Par ailleurs, suivant une disposition de l'invention, le poste central regroupe l'ensemble des appareillages nécessaires à la desserte du poste extérieur, des postes intérieurs, et de la gâche.

Ce regroupement, au poste central, qui peut très simplement être le local technique dont dispose tout immeuble, de l'ensemble de ces appareillages permet un gain notable en volume pour le poste extérieur et les postes intérieurs.

Outre l'avantage qui en résulte pour l'esthétique, ce gain en volume permet avantageusement d'utiliser pour la constitution de ces postes extérieur et intérieurs des composants standard, à la manière de ceux en usage dans l'appareillage électrique, par exemple sous forme de blocs modulaires, ce qui facilite encore les opérations et réduit les coûts.

Enfin, les appareillages nécessaires étant pour l'essentiel regroupés au poste central, la maintenance se trouve également facilitée.

Préférentiellement, dans le portier d'immeuble suivant l'invention, le codage des appels entre le poste extérieur et le poste central se fait par fréquences vocales, tel qu'il est usuellement pratiqué en téléphonie.

Les composants à mettre en oeuvre s'en trouvent avantageusement simplifiés.

Les caractéristiques et avantages de l'invention ressortiront d'ailleurs de la description qui va suivre, à titre d'exemple, en référence aux dessins schématiques annexés sur lesquels :
la figure 1 est un bloc diagramme d'un portier d'immeuble suivant l'invention ;
la figure 2 est une vue en perspective du poste extérieur de ce portier d'immeuble ;
la figure 3 est une vue en perspective éclatée de ce poste extérieur ;
la figure 4 est une vue en perspective de certains des appareillages mis en oeuvre au poste central ;
la figure 5 est une vue en perspective d'un poste intérieur, pour une simple version audio de celui-ci ;
la figure 6 est une vue en perspective éclatée de ce poste intérieur ;
la figure 7 est une vue partielle en élévation du combiné téléphonique que comporte un tel poste intérieur, vu de l'arrière, suivant la flèche VII de la figure 5 ;
la figure 8 est une vue en perspective éclatée d'une version vidéo de ce poste intérieur.

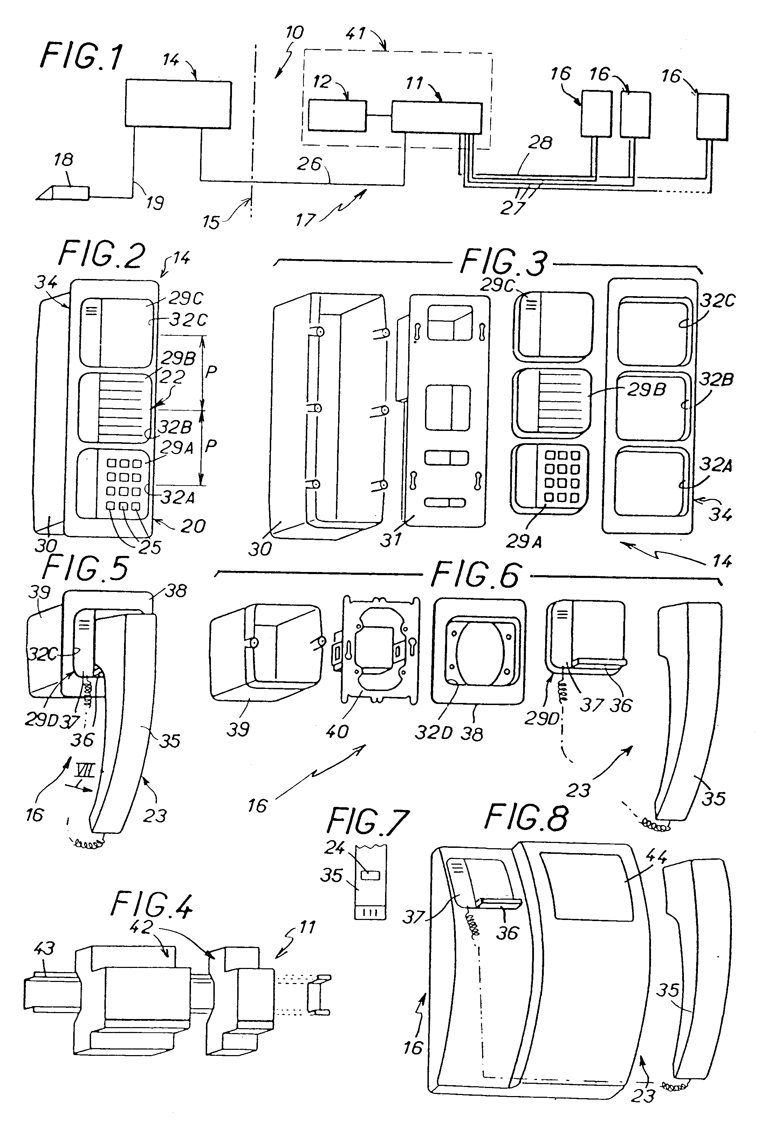

Tel qu'illustré sur la figure 1, le portier d'immeuble 10 suivant l'invention comporte, globalement, outre un poste central 11, qui est nécessaire à son alimentation, et auquel est annexé dans ce but un quelconque bloc d'alimentation 12, par exemple un simple transformateur branché sur le réseau, un poste extérieur 14, qui est à la disposition de tout visiteur se présentant à la porte de l'immeuble 15 à équiper, un poste intérieur 16 par logement présent dans cet immeuble 15, et, tel que détaillé ultérieurement, une filerie 17 propre à l'établissement d'une liaison de communication entre le poste extérieur 14 et l'un quelconque des postes intérieurs 16.

Il comporte, en outre, pour l'actionnement à distance, à partir d'un poste intérieur 16, de la gâche 18, en pratique une gâche électrique, équipant de manière usuelle la porte concernée, une liaison bifilaire 19 reliant le poste extérieur 14 à cette gâche 18.

De manière connue en soi, et tel qu'illustré sur les figures 2 et 3, le poste extérieur 14 comporte, notamment, un ensemble d'appel 20, pour l'émission d'un appel en direction d'un poste intérieur 16, et un ensemble de communication 22, pour l'établissement d'un dialogue entre le visiteur et l'usager du poste intérieur 16 appelé.

De même, chacun des postes intérieurs 16 comporte, lui-même, notamment, tel qu'illustré sur les figures 5 à 7, un ensemble de communication 23, et, pour l'actionnement de la gâche 18 à piloter, un ensemble de commande 24.

Suivant l'invention, l'ensemble d'appel 20 du poste extérieur 14 comporte un clavier d'au moins deux touches 25 permettant un appel codé de chacun des postes intérieurs 16.

Par exemple, et tel que représenté, il y a ainsi douze touches 25, disposées en quatre rangées de trois.

A la manière des touches d'un clavier d'appel téléphonique, il peut s'agir de dix touches numériques, et de deux touches supplémentaires.

Mais il peut tout aussi bien s'agir de touches alphabétiques ou de toutes autres touches chacune individuellement munies d'un quelconque repère.

Quoi qu'il en soit, indépendamment du repère, numérique, alphabétique ou autre qu'elles portent, ces touches 25 sont parfaitement anonymes.

Autrement dit, il n'y a pas, au poste extérieur 14 une quelconque identification des postes intérieurs 16.

En outre, le nombre n de ces touches 25 est totalement indépendant du nombre N de postes intérieurs 16 à appeler.

Ce nombre n peut ainsi être un nombre standard, identique pour tous les immeubles à équiper.

A chaque poste intérieur 16 est attribué un code déterminé, qui doit normalement être connu des visiteurs, et que permettent de reconstituer à chaque fois les touches 25.

L'ensemble d'appel 20 du poste extérieur 14 suivant l'invention s'apparente ainsi au clavier usuel de commande d'une gâche électrique.

En sus de la commande de la gâche 18 à partir d'un poste intérieur 16, il peut d'ailleurs permettre lui aussi d'assurer si désiré une telle commande à partir du poste extérieur 14, à l'aide d'un code spécifique connu des occupants de l'immeuble et commun à l'ensemble de ceux-ci.

Quoi qu'il en soit, cet ensemble d'appel 20 assure suivant l'invention l'anonymat des occupants de cet immeuble.

En outre, indépendamment de la liaison bifilaire 19 nécessaire entre le poste extérieur 14 et la gâche 18, et comme déjà souligné ci-dessus, il permet avantageusement à la partie audio de la filerie 17 de se réduire, d'une part, à une liaison bifilaire 26 entre le poste extérieur 14 et le poste central 11, et, d'autre part, à une liaison monofilaire 27 entre le poste central 11 et chacun des postes intérieurs 16 à laquelle est associé un retour 28 commun à l'ensemble de ces postes intérieurs 16, suivant globalement une liaison du type de celles communément appelées N + 1.

Préférentiellement, le codage des appels entre le poste extérieur 14 et le poste central 11 se fait par fréquences vocales.

Les modalités correspondantes étant bien connues par elles-mêmes, elles ne seront pas décrites ici.

Préférentiellement, également, et tel que représenté, l'ensemble d'appel 20 et l'ensemble de communication 22 du poste extérieur 14 suivant l'invention se présentent conjointement sous la forme de blocs modulaires ayant tous, au moins extérieurement, les mêmes dimensions hors tout.

Par exemple, et tel que représenté, l'ensemble d'appel 20 forme par lui-même un bloc modulaire 29A unique, et l'ensemble de communication 22 comporte de manière distincte un bloc modulaire 29B de haut-parleur et un bloc modulaire 29C de microphone.

Dans la forme de réalisation représentée, ces blocs modulaires 29A, 29B, 29C sont échelonnés en hauteur suivant un pas P régulier.

En association avec une boîte d'encastrement 30 et un support de mécanisme 31 dûment rapporté sur cette boîte d'encastrement 30, ils font chacun individuellement surface à l'extérieur à la faveur d'évidements 32A, 32B, 32C d'une plaque ajourée 34 commune à l'ensemble, suivant une technologie connue par elle-même dans le domaine des appareillages électriques.

La boîte d'encastrement 30, le support de mécanisme 31 et la plaque ajourée 34 sont donc avantageusement des composants standard pour l'ensemble des immeubles à équiper.

En façade, les blocs modulaires 29A, 29B, 29C sont verticalement séparés en deux zones dans la forme de réalisation représentée.

Pour le bloc modulaire 29A que forme l'ensemble d'appel 20 et pour le bloc modulaire 29B de l'ensemble de communication 22, seule la zone de droite, la plus importante, est utilisée.

Au contraire, pour le bloc modulaire 29C de microphone, seule la zone de gauche, la moins importante, est utilisée.

La zone de droite peut dès lors être par exemple mise à profit pour l'inscription du numéro dans la rue en version audio.

En version vidéo, elle peut en variante être mise à profit pour l'implantation de l'objectif d'une caméra.

Dans la forme de réalisation représentée, chacun des postes intérieurs 16 relève d'une technologie de même type que celle dont relève le poste extérieur 14.

En pratique, l'ensemble de communication 23 d'un tel poste intérieur 16 comportant un combiné téléphonique 35 suspendu de manière amovible à un porte-combiné 36 doté à cet effet d'un becquet propre à une telle suspension, ce porte-combiné 36 appartient à un bloc modulaire 29D ayant globalement mêmes dimensions extérieures hors tout que les blocs modulaires 29A, 29B, 29C du poste extérieur 14.

Comme ces blocs modulaires 29A, 29B, 29C, le bloc modulaire 29D d'un poste intérieur 16 est verticalement séparé en deux zones en façade dans la forme de réalisation représentée.

Le porte-combiné 36 occupe la zone de droite, la plus importante.

La zone de droite, qui est la moins importante, est, par exemple, et tel que représenté, mise à profit pour l'implantation d'une grille 37 permettant au son de la sonnerie issue du haut-parleur du combiné téléphonique 35 de ressortir en façade et ainsi d'être mieux perçue.

Dans la forme de réalisation représentée, et tel qu'il est visible sur la figure 7, l'ensemble de commande 24 associé se présente conjointement sous la forme d'une touche de commande portée par le combiné téléphonique 35, sur la face arrière, c'est-à-dire interne, de celui-ci.

Suivant la technologie précédente, le bloc modulaire 29D fait surface à l'extérieur à la faveur d'un évidement 32D d'une plaque ajourée 38 qui est associée à une boîte d'encastrement 39 et à un support de mécanisme 40 dûment rapporté sur cette boîte d'encastrement 39.

Suivant l'invention, le poste central 11, qui, avec son bloc d'alimentation 12, peut être implanté dans un quelconque local technique 41 de l'immeuble 15 concerné, regroupe l'ensemble des appareillages 42 nécessaires à la desserte du poste extérieur 14, des postes intérieurs 16, et de la gâche 18, c'est-à-dire de l'ensemble des composants électroniques ou autres formant en quelque sorte "l'intelligence" correspondante.

Ces appareillages 42 ne relevant pas par eux-mêmes de la présente invention, ils ne seront pas décrits ici.

Parmi eux, il y a évidemment ceux nécessaires au décodage des appels en provenance du poste extérieur 14 et à l'aiguillage de ces appels sur les postes intérieurs 16.

Préférentiellement, et tel que schématisé à titre d'exemple pour deux d'entre eux à la figure 4, les appareillages 42 ainsi mis en oeuvre sont des appareillages modulaires encliquetés sur un ou plusieurs rails de support 43.

Les modalités d'un tel encliquetage étant bien connues par elles-mêmes, elles ne seront pas décrites ici.

Comme les appareillages 42, le bloc d'alimentation 12 peut lui-même se présenter sous la forme d'un appareillage modulaire apte à être encliqueter sur un rail de support 43.

De manière connue en soi, la commande de la gâche 18 peut se faire par rupture de courant, émission de courant ou impulsion.

Les modalités correspondantes ne relevant pas non plus de la présente invention, elles ne seront pas non plus décrites ici.

Dans la variante de réalisation illustrée par la figure 7, chaque poste intérieur 16 comporte, en sus du combiné téléphonique 35 appartenant à l'ensemble de communication 23 et d'un ensemble de commande non visible sur cette figure 7, un moniteur vidéo 44.

La filerie 17 est alors complétée en conséquence (non représenté).

En particulier, elle comporte alors entre le poste extérieur 14 et le poste central 11 une partie vidéo de quatre fils supplémentaires.

La présente invention ne se limite d'ailleurs pas aux formes de réalisation décrites et représentées, mais englobe toute variante d'exécution.

En particulier, les boîtes d'encastrement des blocs modulaires mis en oeuvre pourraient tout aussi bien être remplacées par des cadres à disposer en saillie sur un quelconque support.

De même, la gâche électrique pourrait être remplacée par une serrure électrique.

Enfin, l'une des touches présentes au poste extérieur peut constituer une touche de validation.

Il va de soi par ailleurs que, bien que l'invention soit plus particulièrement destinée à l'équipement d'immeubles collectifs, elle peut tout aussi bien être appliquée à une maison individuelle.

L'expression "portier d'immeuble" doit donc être entendue dans un sens large comme pouvant tout aussi bien également recouvrir ce qui est communément appelé dans ce cas un "portier de villa".

Le portier d'immeuble suivant l'invention peut de surcroît permettre de faire, si désiré, de l'interphonie à l'intérieur d'un même appartement, en équipant en conséquence de plusieurs postes intérieurs celui-ci.

## Revendications

1. Portier d'immeuble du genre comportant, outre un poste central (11) propre à son alimentation, un poste extérieur (14) à la disposition d'un visiteur, un poste intérieur (16) par logement, et une filerie (17) propre à l'établissement d'une liaison de communication entre le poste extérieur (14) et l'un quelconque des postes intérieurs (16), le poste extérieur (14) comportant, notamment, un ensemble d'appel (20) et un ensemble de communication (22), et chacun des postes intérieurs (16) comportant, lui-même, notamment, un ensemble de communication (23) et, pour l'actionnement de la gâche (18) à piloter, un ensemble de commande (24), caractérisé en ce que, l'ensemble d'appel (20) du poste extérieur (14) comportant un clavier d'au moins deux touches (25), ledit clavier permet un appel codé de chacun des postes intérieurs (16), et, indépendamment de la liaison bifilaire (19) nécessaire entre le poste extérieur (14) et la gâche (18), la partie audio de la filerie (17) se réduit, d'une part, à une liaison bifilaire (26) entre le poste extérieur (14) et le poste central (11), et, d'autre part, à une liaison monofilaire (27) entre le poste central (11) et chacun des postes intérieurs (16) à laquelle est associé un retour (28) commun à l'ensemble de ces postes intérieurs (16).

2. Portier d'immeuble suivant la revendication 1, caractérisé en ce que l'ensemble d'appel (20) et l'ensemble de communication (22) du poste extérieur (14) se présentent conjointement sous la forme de blocs modulaires (29A, 29B, 29C) ayant tous, au moins extérieurement, les mêmes dimensions hors tout.

3. Portier d'immeuble suivant la revendication 2, caractérisé en ce que l'ensemble d'appel (20) du poste extérieur (14) forme un bloc modulaire (29A) unique.

4. Portier d'immeuble suivant la revendication 2, caractérisé en ce que l'ensemble de communication (22) du poste extérieur (14) comporte de manière distincte un bloc modulaire (29B) de haut-parleur et un bloc modulaire (29C) de microphone.

5. Portier d'immeuble suivant la revendication 2, caractérisé en ce que les blocs modulaires (29A, 29B, 29C) du poste extérieur (14) sont échelonnés en hauteur suivant un pas (P) régulier.

6. Portier d'immeuble suivant l'une quelconque des revendications 2 à 5, caractérisé en ce que, les blocs modulaires (29A, 29B, 29C) du poste extérieur (14) font chacun individuellement surface à l'extérieur à la faveur d'évidements (32A, 32B, 32C) d'une plaque ajourée (34) commune à l'ensemble.

7. Portier d'immeuble suivant l'une quelconque des revendications 2 à 6, caractérisé en ce que, l'ensemble de communication (23) d'un poste intérieur (16) comportant un combiné téléphonique (35) suspendu de manière amovible à un porte-combiné (36), ledit porte-combiné (36) appartient à un bloc modulaire (29D) ayant globalement mêmes dimensions extérieures hors tout que les blocs modulaires (29A, 29B, 29C) du poste extérieur (14).

8. Portier d'immeuble suivant la revendication 7, caractérisé en ce que le bloc modulaire (29D) d'un poste intérieur (16) fait surface à l'extérieur à la faveur d'un évidement (32D) d'une plaque ajourée (38).

9. Portier d'immeuble suivant l'une quelconque des revendications 1 à 8, caractérisé en ce que le poste central (11) regroupe l'ensemble des appareillages (42) nécessaires à la desserte du poste extérieur (14), des postes intérieurs (16) et de la gâche (18).

10. Portier d'immeuble suivant la revendication 9, caractérisé en ce que les appareillages (42) présents au poste central (11) sont des appareillages modulaires encliquetés sur un ou plusieurs rails de support (43).

11. Portier d'immeuble suivant l'une quelconque des revendications 1 à 10, caractérisé en ce que le codage des appels entre le poste extérieur (14) et le poste central (11) se fait par fréquences vocales.
